# EUROPEAN PATENT SPECIFICATION

(11) **EP 2 881 788 B1**
(45) Date of publication and mention of the grant of the patent: **30.12.2020**
(21) Application number: 13825572.4
(22) Date of filing: 02.08.2013
(51) Int. Cl.: G03B 17/56, G06T 5/40, H04N 5/225, G03B 15/02, G02B 13/00, G03B 15/05, G03B 15/06

(54) **PHOTOGRAPHING AUXILIARY TOOL, PHOTOGRAPHING DEVICE AND PHOTOGRAPHING METHOD**
FOTOGRAFIERHILFSWERKZEUG, FOTOGRAFIERVORRICHTUNG UND FOTOGRAFIERVERFAHREN
OUTIL AUXILIAIRE DE PRISE DE PHOTOGRAPHIES, DISPOSITIF DE PRISE DE PHOTOGRAPHIES ET PROCÉDÉ DE PRISE DE PHOTOGRAPHIES

(30) Priority: 03.08.2012 JP 2012172701
(43) Date of publication of application: 10.06.2015
(73) Proprietor: NEC Corporation, Tokyo 108-8001 (JP)
(72) Inventor: ISHIYAMA, Rui, Tokyo 108-8001 (JP)
(74) Representative: Vossius & Partner Patentanwälte Rechtsanwälte mbB
(86) International application number: PCT/JP2013/070987
(87) International publication number: WO 2014/021449

(56) References cited:
- DE-A1-102009 009 599
- DE-B3-102010 007 421
- JP-A- 11 223 851
- JP-A- H11 223 851
- JP-A- 2005 181 598
- JP-A- 2005 234 422
- JP-A- 2006 049 990
- JP-A- 2008 102 103
- JP-A- 2009 284 455
- JP-A- 2009 284 455

## Description

The present invention relates to an imaging aid, an imaging device, and an imaging method for imaging an object having concave or convex surfaces subject to intense specular reflection.

A system of imaging concave and convex portions on a surface of an object, for using the obtained images for inspection, authentication, or the like has been formulated.

For example, Patent Literature 1 describes a light irradiating device including a light diffuser having substantially a plate form or a dome form provided to be adjacent to and cover the inspection region imaged by the inspection camera, a plurality of light irradiators provided outside the light diffuser to be apart from one another, and transmitting light through the light diffuser to irradiate the inspection region with the light, and a cylindrical member elongating in the direction of the camera from around the hole for imaging and observation provided for the light diffuser, which is configured so that the camera can image the inspection region through the cylindrical member and the hole for observation and so that light from the light irradiator does not directly enter the opening of the cylindrical member at the side of the camera. JP2009284455 A refers to an image reading apparatus including an image sensor including a photo-detection plane on which a plurality of photo-detection areas disposed in a matrix shape are formed; an optical system for image-forming, on the photo-detection plane, light advancing from the side of a reading object Dc; and a case including an open end at the side of the reading object Dc, for internally housing and holding the image sensor and the optical system.

On the other hand, attempts to use individual difference in minute convex and concave portions of an object for authentication and verification have started.

Patent Literature 1: Japanese Patent Application Publication No. 2008-102103

However, when using such individual difference in minute convex and concave portions of an object for authentication and verification, so as to obtain a stable verification result, it is required to obtain a captured image from which the same feature point can be extracted at the time of registration and at the time of verification respectively. For this purpose, the captured image should have clear contrast in minute concave and convex portions of the surface of an object.

Other example of conventional light irradiating devices are disclosed in JP 2008/102103 A and JP 2009/284455 A.

However, although directed to an imaging aid for imaging the concave and convex portions of an object, the technology of Patent Literature 1 aims at resolving luminance shortage or luminance irregularity. Therefore, the technology of Patent Literature 1 emits light from all directions and all the light-irradiation cubic angles, and therefore cannot clearly image shading difference of minute concave and convex portions of an object.

The present invention has been conceived of in view of the above-described problem, and aims at providing an imaging aid device as defined in independent claim 1, able to emphasize contrast of concave and convex portions on a surface of an object, e.g., a pearskin pattern provided on an article, as well as enabling to obtain a captured image from which a stable feature point can be extracted and not susceptible to minute difference in position or orientation of an object which cannot be avoided at the time of imaging, and a camera as defined in independent claim 7.

### [Solution to Problem]

### [Advantageous Effects of Invention]

The present invention can capture an image on which contrast of concave and convex portions of a surface of an object, e.g., pearskin pattern provided on a surface of an object, is emphasized.

### [Brief Description of Drawings]

Fig. 1 is a diagram explaining an overview of the present invention.
Fig. 2 is a diagram explaining a black surface region of a covering lid.
Fig. 3 is a diagram explaining an image obtained by imaging a pearskin surface using the present invention and an image obtained by imaging without using the present invention.
Fig. 4 is a diagram showing a configuration of an imaging aid according to a first exemplary embodiment of the present invention.
Fig. 5 is a diagram exemplifying a state in which an object is fit to the imaging aid according to the first exemplary embodiment.
Fig. 6 is a diagram showing a modification example of the imaging aid according to the first exemplary embodiment.
Fig. 7 is a diagram showing a modification example of the imaging aid according to the first exemplary embodiment.
Fig. 8 is a diagram showing a modification example of the imaging aid according to the first exemplary embodiment.
Fig. 9 is a diagram showing a configuration of an imaging device according to a second exemplary embodiment of the present invention.
Fig. 10 is a diagram showing an imaging aid according to a third exemplary embodiment.
Fig. 11 is a diagram showing an imaging aid according to a fourth exemplary embodiment.

### [Description of Embodiments]

The present invention relates to an imaging aid and an imaging device imaging concave and convex portions of a surface of an object, e.g., a pearskin pattern provided on a surface of an object. Exemplary embodiments of the present invention are detailed as follows.

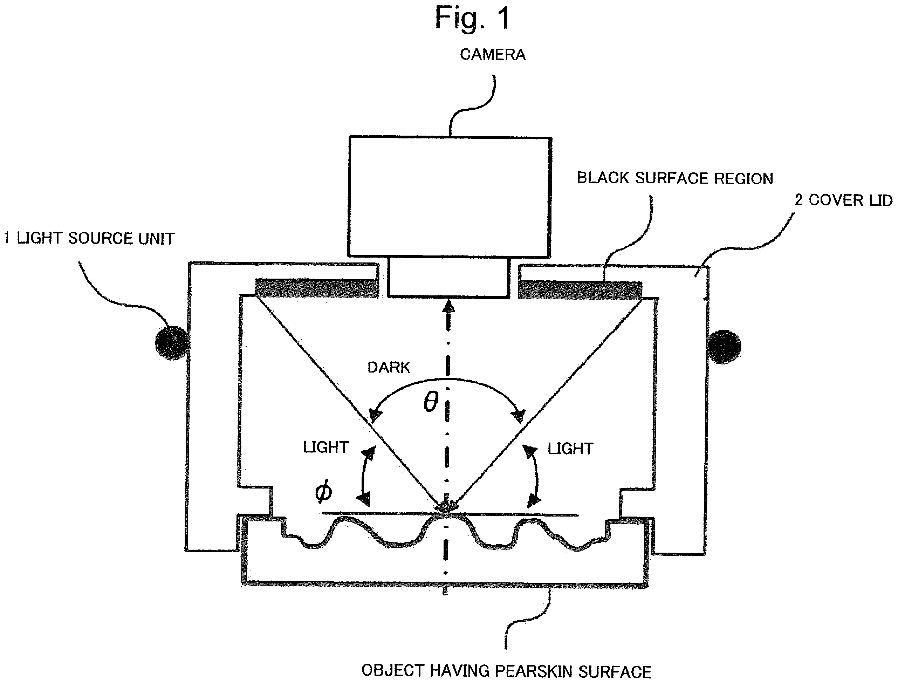

The overview of the present invention is described with reference to Fig. 1. An imaging aid according to an exemplary embodiment of the present invention is an imaging aid aiding imaging of a predetermined region of a surface having minute concave and convex portions and being subject to intense specular reflection (e.g., a pearskin surface having a pearskin pattern,) of an object, and includes a light source unit 1 irradiating light, and a cover lid 2 having a shape to cover a predetermined region of a surface of an object, a part of a surface of the cover lid 2 corresponding to a predetermined angular range from the normal line direction directly opposing the predetermined region being black and absorbing light, and another surface of the cover lid 2 corresponding to another angular range is formed by a light-source surface diffusing and emitting light irradiated from the light source unit 1.

For example, the cover lid 2 is formed to be parallel to the pearskin surface, is provided with an imaging hole through which image capturing is performed from the normal line direction of the pearskin surface, and includes an upper portion having a region opposing the pear surface being black, and a side portion formed to be vertical to the upper surface and made of a material diffusing light of the light source unit 1.

The black surface region of the cover lid 2 is determined by the angular range of a dark region θ and the angular range of a light region ϕ with respect to the normal line of a surface in a verification region of the pearskin surface of an object (e.g., top surface of the convex portion at the center of the verification region). In this way, the distribution of the black surface and the diffusing surface is determined solely by the angular range with respect to the normal line direction of the pearskin surface, and its form and angle of the surface is arbitrary. In other words, although the diffusing material's surface is explained to be vertical to the black surface in paragraph 0015, this is one example, and its form and arrangement angle are arbitrary. The black surface may not also be plane, and may have an arbitrary form as long as it covers all the range of the angle θ from the normal line direction of the pearskin surface.

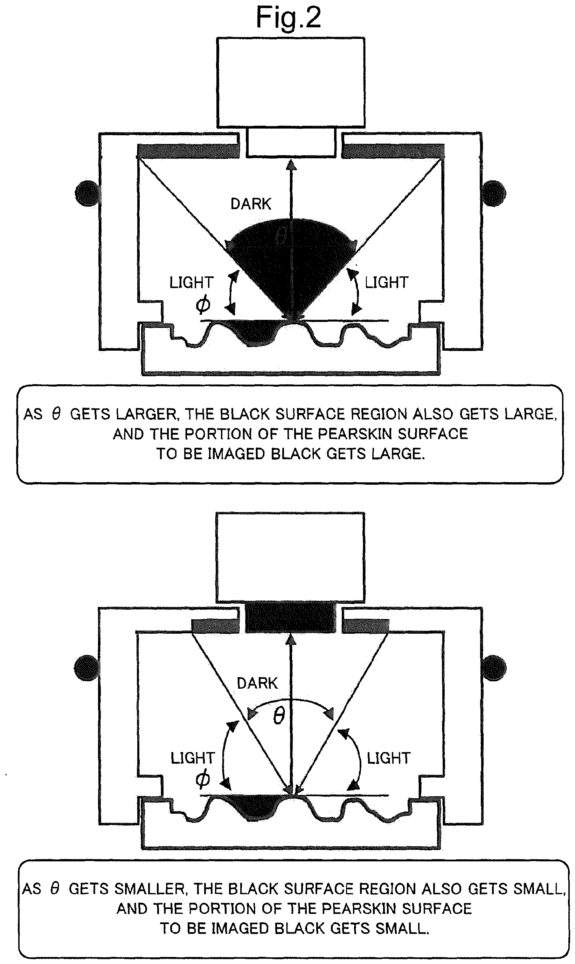

Since the black surface region of the cover lid 2 does not reflect the illumination light from the light source unit 1, the top portion of the convex portion of the pearskin surface directly opposing the camera mounted to the imaging hole of the upper surface is imaged to be black. As shown in Fig. 2, there is a relation between the size of the black surface region of the cover lid 2 and the angular range θ of the dark region, such as the larger the angular range θ of the black dark region, the larger gets the black surface region of the cover lid 2, and as the smaller the angular range θ of the dark region, the smaller gets the black surface region of the cover lid 2. As the larger the black surface region of the cover lid 2, the portion of the pearskin surface imaged to be black gets larger, and as the smaller the black surface region, the portion of the pearskin surface imaged to be black gets smaller. In the present invention, the angular ranges θ and ϕ are adjusted so that the number of black pixels in the verification region in the captured image of the pearskin surface or the degree of separation of the brightness value of the pixels in the verification region is a predetermined value (e.g., 25%). Specifically, the size of the black surface region of the cover lid 2 may be changed, or the height of the side surface of the cover lid 2 may be changed. Various methods can be used to achieve this result. In one example, a screw mechanism for moving up and down the black surface region is included, and the height of the side surface of the cover lid 2 can be adjusted by rotating the screw mechanism. This is just one example, and other methods can also be used.

Since the actual sizes of the pearskin surface's concave and convex portions vary depending on the parameters used at the time of processing the authentication target, the angular ranges θ, ϕ are adjusted to obtain a black surface region of an adequate size, thereby optimizing the brightness distribution of the image to be captured. Note that a brightness value which yields the maximum first derivation of the brightness change histogram is used for the threshold value for binarization.

Accordingly, the top portion of the convex portion of the pearskin surface having the normal line in the direction directly opposing the camera will be imaged to be black, and the concave portion of the pearskin surface not directly opposing will be imaged to be white as a result of reflection of light from various directions. As a result, dark and light contrast in the concave and convex portions in the obtained image is emphasized, and it becomes easy to stably extract the top portion as the feature point from the image.

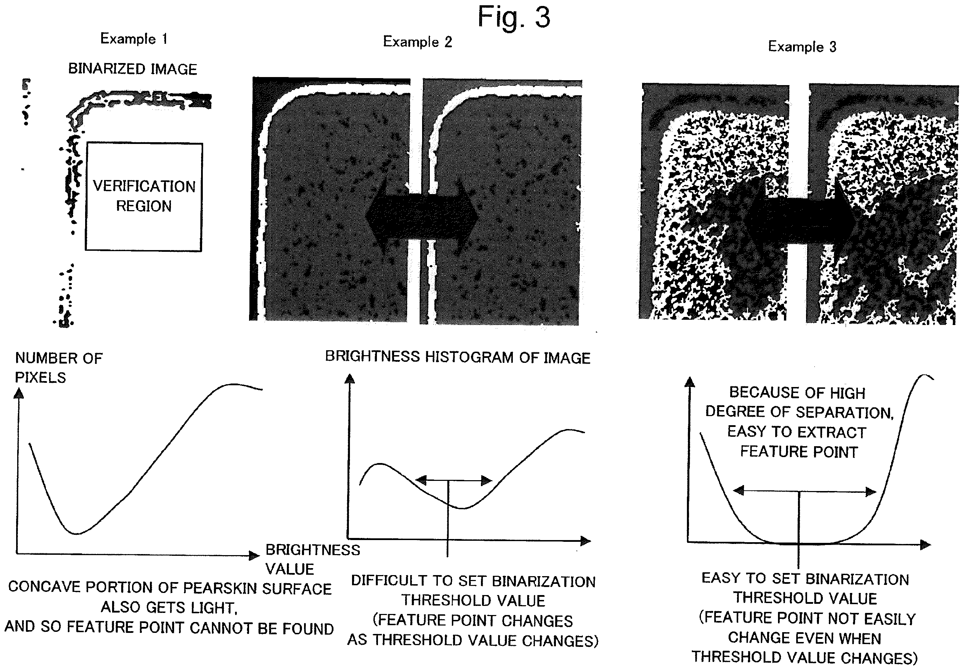

Fig. 3 shows an example of binarized image of the pearskin surface imaged by using the imaging aid device of the present application and binarized image of the pearskin surface imaged not using the imaging aid device of the present application. In Example 1 imaged not using the present imaging aid device, the concave portion of the verification region is also imaged to be white, and the feature point cannot be found therein. In another example (Example 2) imaged not using the present imaging aid device, it is difficult to set the threshold value used in binarizing the captured image, and the feature point changes by change in threshold value. As opposed to them, Example 3 obtained by imaging the pearskin surface using the present imaging aid device has a high degree of separation between the concave portion and the convex portion of the obtained image. Therefore, the feature point of the binarized image is stable and not vulnerable to even a small change in threshold value of binarization. In addition, even when the object is not firmly fixed when imaging the object and the orientation of the pearskin surface is minutely changed, if the angle is sufficiently smaller than θ, the top portion can still be always clearly extracted as the dark region, which means that the feature point can be stably extracted.

### <First Exemplary Embodiment>

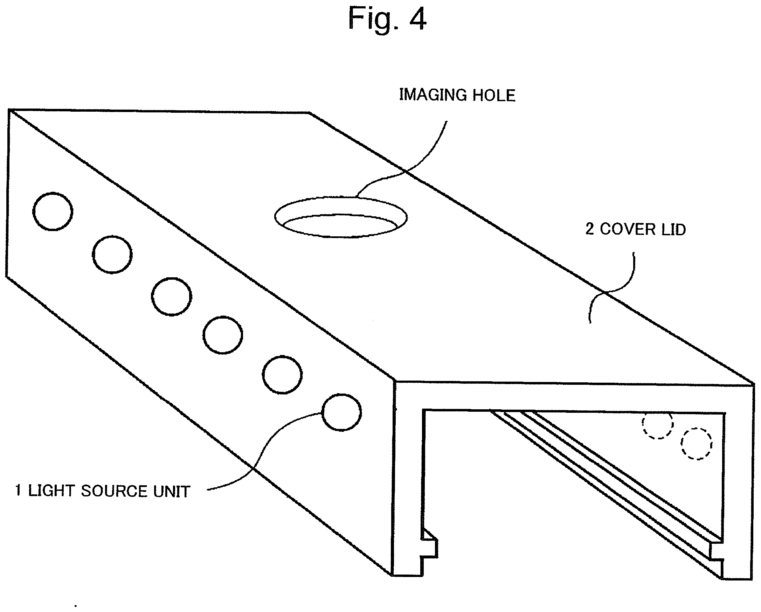

Fig. 4 shows a configuration of an imaging aid 10 according to the first exemplary embodiment of the present invention.

The imaging aid 10 according to the first exemplary embodiment includes the light source unit 1 and the cover lid 2 described above. The imaging aid 10 is formed to fit to the pearskin surface side of the object which is an imaging target, and to cover the pearskin surface. The inner surface of the upper portion of the cover lid 2, i.e., a part of the surface opposing the pearskin surface when fit to the object to be imaged is a black surface.

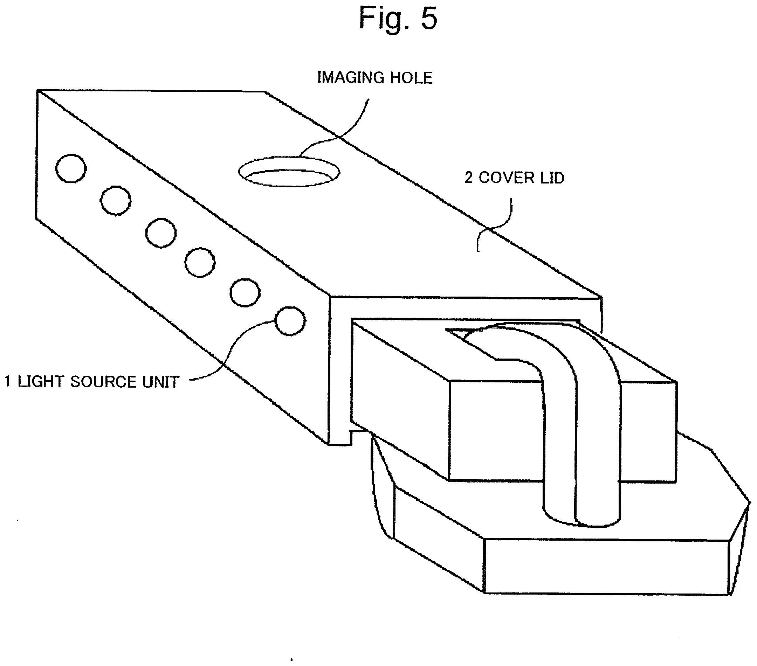

By causing the object to fit the cover lid 2 of the imaging aid 10, the position and posture of the object is fixed. The object includes such parts as a fastening part, a slide fastener, a bolt, a nut, an emblem, or the like. Fig. 5 shows an example showing a state in which the object is fit to the imaging aid 10. In this example, the object is a slide fastener. In the state in which the object is fit in the imaging aid 10 in this way, a camera mounted in the imaging hole of the cover lid 2 is used to image the pearskin surface of the object. Since the black surface region inside the cover lid 2 does not reflect the illumination light from the light source unit 1, the top portion of the convex portion of the pearskin surface directly opposing the camera mounted to the imaging hole on the upper surface will be imaged to be black. Moreover, the concave portion of the pearskin surface not directly opposing the camera will reflect light from various directions and be imaged to be white. Consequently, the obtained image will have emphasized contrast between dark and light in the concave and convex portions.

The verification region of the pearskin surface is not particularly limited as long as it is a region having a pearskin pattern. However, desirably, the verification region is predetermined so that the verification becomes easy. In an example, the verification region may be determined to be a region at a position determined with reference to a reference portion of an article in common. For example, the reference portion of an article may be a trademark, a logo, a manufacturer's name, a manufacturing company, a brand name, a product name, a product number, or the like, of the product, which is attached, printed, impressed, marked with a hot iron on the article. These reference portions have the same pattern throughout items of the same article or product, and have a characteristic appearance. By determining the position and posture of these reference portions as a reference, and memorizing the characteristics thereof, the verification region of an article can be automatically detected.

The pearskin pattern is not limited to those in which the pearskin pattern is formed as a design, but also includes those in which the pearskin pattern is intentionally formed in the verification region for identification and verification of an article. Still further, the pearskin pattern is not limited to those provided by processing the metal or synthetic resin (e.g., plastic), but also includes a wrinkle pattern (e.g., grain) or the like obtained by surface processing (e.g., grain processing) leather products. In an example of a grain processed leather bag, the surface of the skin of the bag is provided with minute concave and convex portions in a random manner, and these minute concave and convex portions can be considered to be the pearskin pattern.

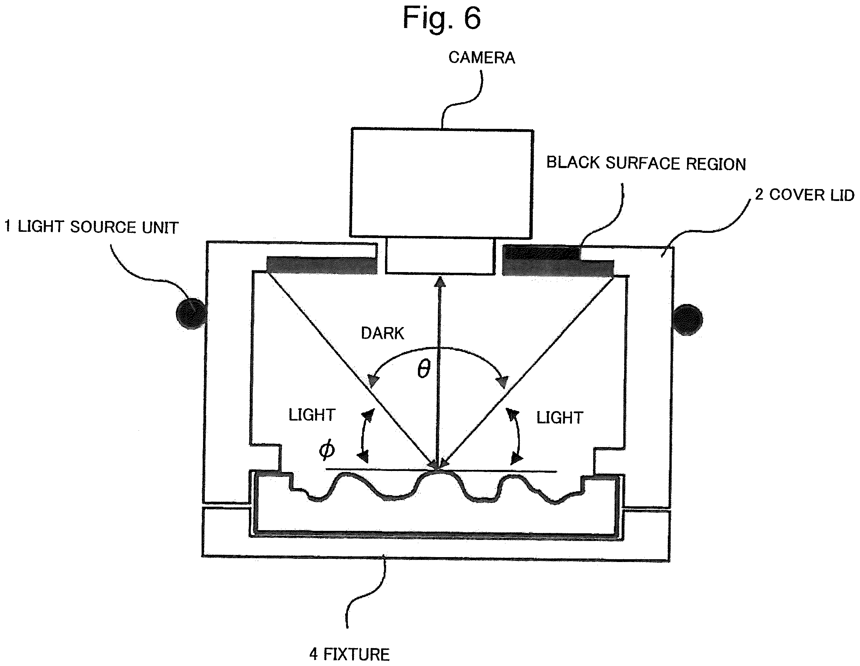

Note that the imaging aid device 10 may further include a fixture 4 fixing the object fit to the cover lid 2 by sandwiching it from below as shown in Fig. 6.

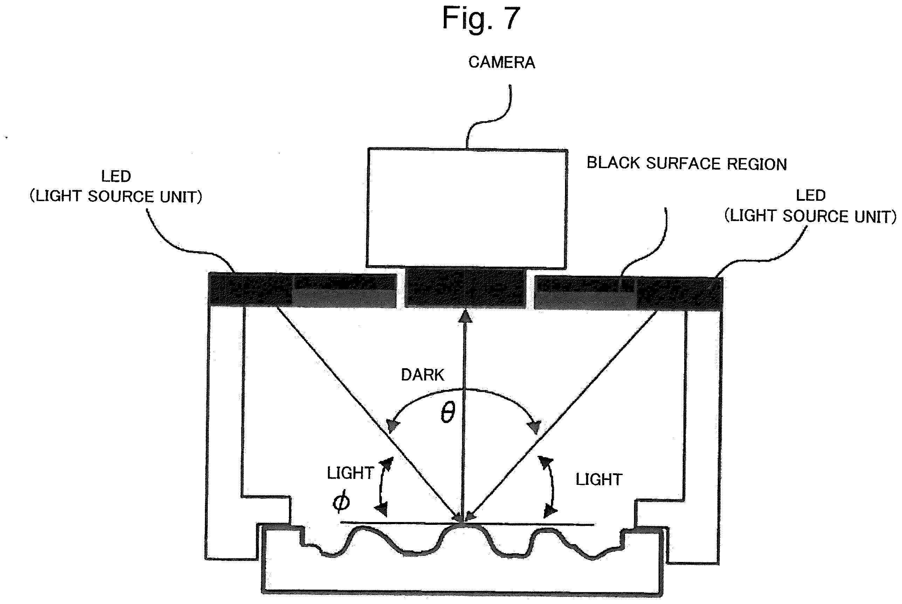

Also as shown in Fig. 7, a light source unit 1 may be provided on the upper portion of the cover lid 2. In this case, the side portion may be formed by a material reflecting irradiated light (e.g., the inner side may be white).

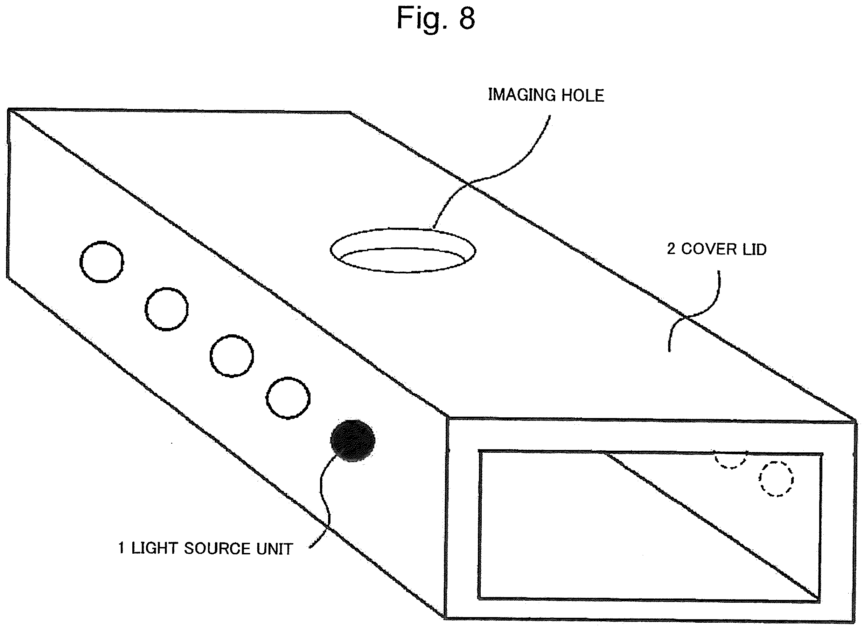

Although an object is fit in the first exemplary embodiment described above, the present invention is not limited to this. It is possible to configure so that an object be inserted deep in the inner wall of the imaging aid as shown in Fig. 8.

Such configurations as exemplified by these modification examples can also achieve effects similar to those of the above-described first exemplary embodiment.

The black surface region of the cover lid 2 may be configured to be replaceable. It is possible to configure so that the size (angular ranges of dark region θ and light region ϕ) of the black surface region for each type of object is memorized in the memory device in advance, and switch the size of the black surface region by replacing the imaging aid or the like for each type of object to be imaged. Accordingly, various types of articles can be authenticated with the highest quality.

Regarding the setting of size of the black surface region (setting of angular ranges of dark region θ and light region ϕ), the number of black pixels in the verification region of the captured image of the pearskin surface was explained to be 25% of the entirety for example. However, this numerical value is an example, and it is possible to use an optimal value that can achieve the highest authentication quality, which has been obtained through experiments in advance.

In addition, the predetermined optimal value may be defined for each type of article to be verified, respectively. So as to switch the predetermined value, the article can be identified by the shape and design of the reference portion of the article, and the size of the black surface region can be adjusted so as to yield the value determined for the article.

### <Second Exemplary Embodiment>

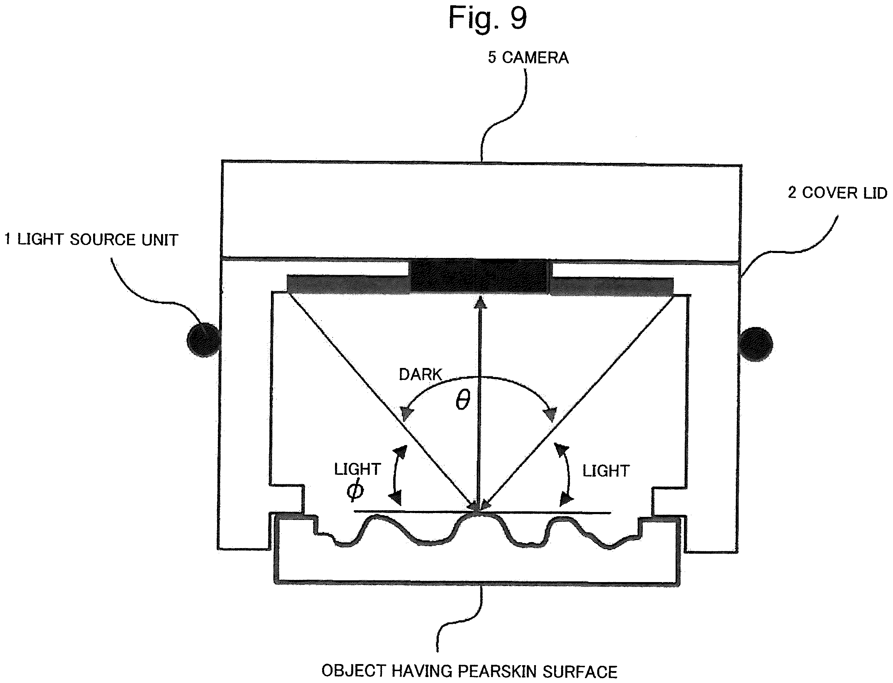

Fig. 9 shows a configuration of the imaging device 20 according to the second exemplary embodiment of the present invention. The imaging device 20 according to the second exemplary embodiment is configured by the imaging aid 10 of the first exemplary embodiment and a camera 5 that are integrally formed, and the camera 5 is fixed to the imaging hole provided for the cover lid 2 of the imaging aid 10. This camera 5 images the pearskin surface of an object. The camera 5 may include a microlens.

According to the described configuration, the second exemplary embodiment can achieve a similar effect to that of the first exemplary embodiment.

Note that the mechanism for capturing an image of a pearskin surface from the normal line direction is not limited to providing the cover lid with an imaging hole to mount the camera. For example, it may be provided a half mirror and configured to capture an image of a pearskin surface through this half mirror.

### <Third Exemplary Embodiment>

In the imaging aid 10 of the first exemplary embodiment, if the degree of adhesion of the object and the cover lid in fitting portions is low, the image may be changed due to defocusing or angular change in illumination, thereby degrading the recognizing performance. The third exemplary embodiment of the present invention that can tackle with such a problem is explained below.

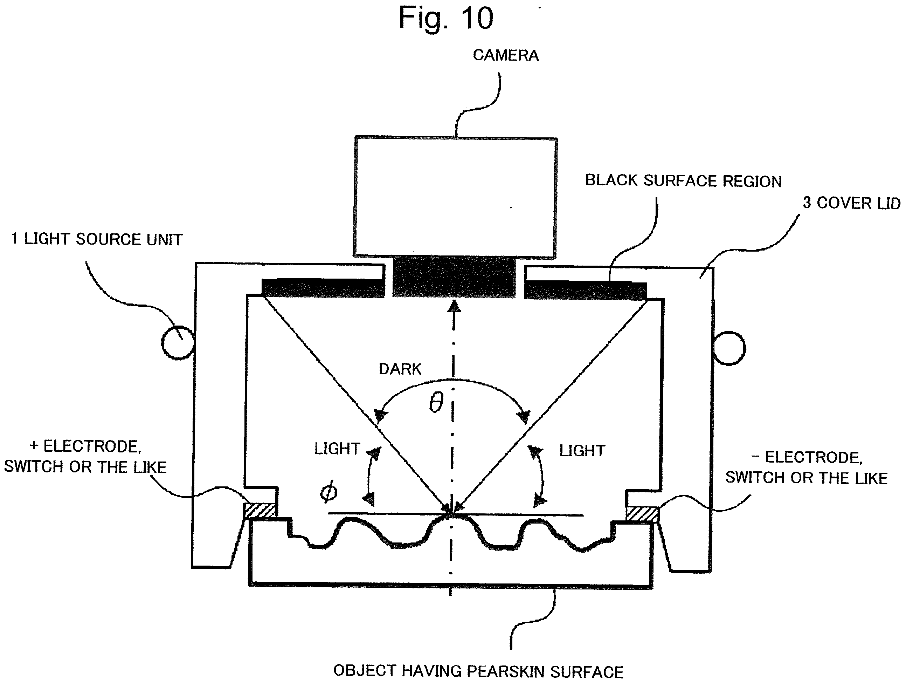

Fig. 10 shows a configuration of an imaging aid 30 according to the third exemplary embodiment. The cover lid 3 of the imaging aid 30 includes a mechanism for detecting that the object fit to the cover lid 3 is appropriately adhered, in addition to the configuration of the first exemplary embodiment.

Specifically, in the cover lid 3, + electrode and - electrode, or a switch, sensor or the like reacting the pressure are provided in the portion to be in contact with the fitted object (fitting portion), thereby turning ON (illumination) the light source unit 1 when the object is appropriately adhered, and turning OFF (non-illumination) the light source unit 1 when the object is not appropriately adhered. For example when the object is a metal part, + electrode may be provided in one side of the fitting portion, and - electrode in the other side of it, to obtain a configuration so that a current is supplied to the light source unit 1 to turn it ON when there is short between these + and - electrodes. When the object is not metal, one or both sides of the fitting portion may be provided with a switch or a sensor reacting to the pressure, to obtain a configuration so that a current is supplied to the light source unit 1 to turn it ON when the switch or the like has detected a certain pressure.

Accordingly, the camera can detect the lightness when the light source unit 1 is turned ON (illumination) and perform imaging, which enables the camera to refrain from imaging when there is failure in adhesion, and to perform imaging at an adequate timing (at the time of favorable adhesion).

In addition, the present embodiment can enable usage as an independent part even without interconnect or connection with a camera or an imaging device, which helps manufacturing at reduced cost.

### <Fourth Exemplary Embodiment>

The following explains the fourth exemplary embodiment of the present invention.

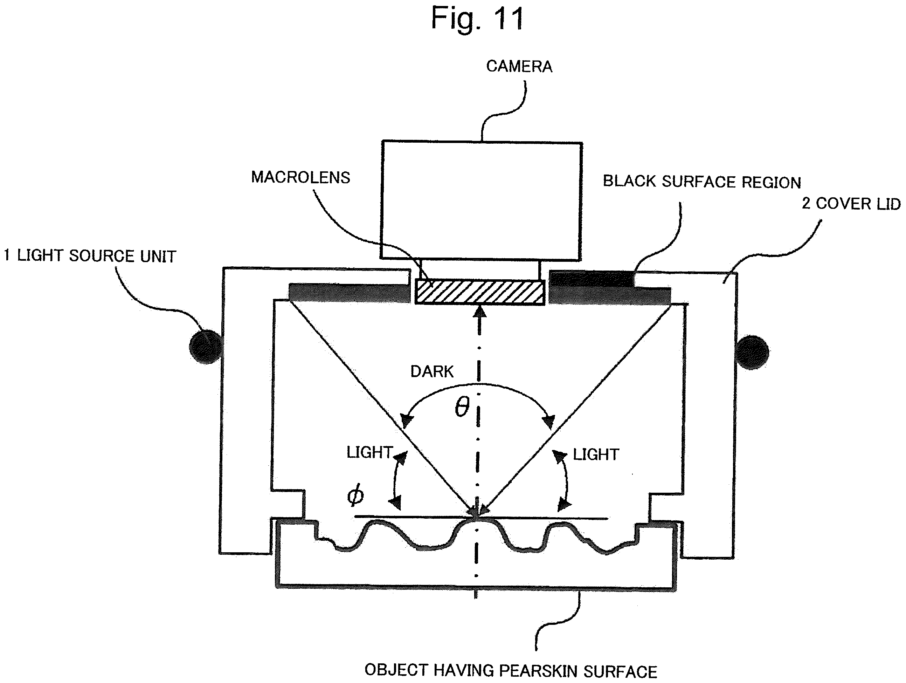

Fig. 11 shows a configuration of an imaging aid 40 according to the fourth exemplary embodiment. The imaging aid 40 is provided with a microlens in a portion to which a camera is mounted. Accordingly, any smartphone, camera-equipped portable telephone, or the like that are commercially available can be used, instead of dedicated cameras for recognition, which helps reduce the cost.

It should be noted that above-described first to fourth embodiments may be combined.

### [Reference signs List]

- 1: light source unit
- 2: cover lid
- 5: camera
- 10: imaging aid
- 20: imaging device

## Claims

1. An imaging aid device (10) aiding imaging of a predetermined region of a pearskin surface of an object having minute concave and convex portions and the predetermined region being subject to intense specular reflection, comprising:
a light source unit (1) that is configured to irradiate light; and a cover lid (2) that has a shape to cover a predetermined region of a surface of the object, wherein
a part of a surface of the cover lid (2) corresponding to a predetermined angular range from a normal line direction directly opposing the predetermined region is a black surface region, and another surface of the cover lid (2) corresponding to another angular range is made of a light-source surface diffusing and emitting light irradiated from the light source unit (1), and
the cover lid (2) comprises an upper portion facing the surface of the object;
a side portion provided between the surface of the object and the upper portion and connecting the upper portion; and
an imaging hole provided in the upper portion of the cover lid (2) being configured to mount a camera at the imaging hole; wherein
the light source unit is provided near the side of the upper portion of the side portion of the cover lid (2) and
the black surface region is provided on an inner surface of the upper portion according to a predetermined angular range from the normal line of the surface of the object,
the imaging aid device (10) being configured to determine the angular range of the black surface region of the cover lid (2) so that a degree of separation of a brightness value of pixels in the predetermined region in an image obtained by imaging the pearskin surface of the object or a number of pixels having brightness equal to or below a predetermined threshold value becomes a predetermined value; and
**characterized in that**
the imaging aid device (10) being further configured to determine the angular range of the black surface region for each article to be imaged, wherein the type of the article to be imaged is identified, without depending on individual items, by characteristic appearance of the article to be imaged, the appearance having a same pattern throughout items of the same article, and the imaging aid device (10) comprises a mechanism to adjust the angular range of the black surface region, to a predetermined value determined to the type of the article.

2. The imaging aid device (10) according to Claim 1, wherein the cover lid (2) is provided with a mechanism for imaging the predetermined region from the normal line direction, in the black surface region.

3. The imaging aid device (10) according to Claim 1 or 2, having a shape to fit to and fix a part including at least one of a fastening part, a slide fastener, a bolt, a nut, and an emblem.

4. The imaging aid device (10) according to any one of Claims 1 to 3, wherein the cover lid (2) has a shape to fit to and fix an object, and the imaging aid (10) further comprises a mechanism to turning ON the light source unit (1) if the fitted object is in close contact with a fitting portion of the cover lid (2).

5. The imaging aid device (10) according to any one of Claims 1 to 4, wherein the imaging aid (10) has a shape to appropriately fit to the article for each type of object to be imaged,a range of a predetermined black surface region is set for each article, and the imaging aid (10) is replaceable with respect to a camera(5).

6. The imaging aid device (10) according to any one of Claims 1 to 5, wherein a microlens is provided at a portion of the cover lid (2) to mount thereon a camera (5).

7. A camera (5) mounting thereon the imaging aid device (10) according to any one of Claims 1 to 6.

8. The imaging aid device (10) according to any one of claims 1 to 6, wherein the imaging hole to mount the camera (5) is provided on a center of the black surface region.

## Patentansprüche

1. Abbildungsunterstützungsvorrichtung (10), die eine Abbildung eines vorgegebenen Bereichs einer strukturierten Oberfläche eines Gegenstands unterstützt, der sehr kleine konkave und konvexe Abschnitte aufweist, wobei der vorgegebene Bereich einer intensiven Spiegelreflexion ausgesetzt wird, mit:
einer Lichtquelleneinheit (1), die dafür konfiguriert ist, Licht abzustrahlen; und
einer Abdeckung (2), die eine derartige Form hat, dass ein vorgegebener Bereich einer Oberfläche des Gegenstands abgedeckt wird, wobei
ein Teil einer Oberfläche der Abdeckung (2), der einem vorgegebenen Winkelbereich bezüglich einer Normalenrichtung entspricht und dem vorgegebenen Bereich direkt gegenüberliegt, ein schwarzer Oberflächenbereich ist, und eine andere Oberfläche der Abdeckung (2), die einem anderen Winkelbereich entspricht, aus einer Lichtquellenoberfläche besteht, die von der Lichtquelleneinheit (1) abgestrahltes Licht streut und emittiert, und
die Abdeckung (2) aufweist:
einen oberen Abschnitt, der der Oberfläche des Gegenstands zugewandt ist;
einen Seitenabschnitt, der zwischen der Oberfläche des Gegenstands und dem oberen Abschnitt angeordnet und mit dem oberen Abschnitt verbunden ist; und
ein Abbildungsloch, das im oberen Abschnitt der Abdeckung (2) ausgebildet und dafür konfiguriert ist, eine Kamera am Abbildungsloch zu montieren,
wobei die Lichtquelleneinheit in der Nähe der Seite des oberen Abschnitts des Seitenabschnitts der Abdeckung (2) angeordnet ist, und
der schwarze Oberflächenbereich auf einer Innenfläche des oberen Abschnitts gemäß einem vorgegebenen Winkelbereich von der Normalenrichtung zur Oberfläche des Gegenstands angeordnet ist,
wobei die Abbildungsunterstützungsvorrichtung (10) dafür konfiguriert ist, den Winkelbereich des schwarzen Oberflächenbereichs der Abdeckung (2) derart zu bestimmen, dass ein Grad der Trennung eines Helligkeitswerts von Pixeln in dem vorgegebenen Bereich in einem durch Abbilden der strukturierten Oberfläche des Gegenstands erhaltenen Bild, oder eine Anzahl von Pixeln mit einer Helligkeit, die kleiner oder gleich einem vorgegebenen Schwellenwert ist, ein vorgegebener Wert wird;
**dadurch gekennzeichnet, dass**
die Abbildungsunterstützungsvorrichtung (10) ferner dafür konfiguriert ist, den Winkelbereich des schwarzen Oberflächenbereichs für jeden abzubildenden Gegenstand zu bestimmen, wobei der Typ des abzubildenden Gegenstands unabhängig von einzelnen Stücken des Gegenstands durch ein charakteristisches Erscheinungsbild des abzubildenden Gegenstands identifiziert wird, wobei das Erscheinungsbild über Stücke des gleichen Gegenstands hinweg das gleiche Muster aufweist, und wobei die Abbildungsunterstützungsvorrichtung (10) einen Mechanismus zum Einstellen des Winkelbereichs des schwarzen Oberflächenbereichs auf einen vorgegebenen Wert aufweist, der für den Typ des Gegenstands festgelegt ist.

2. Abbildungsunterstützungsvorrichtung (10) nach Anspruch 1, wobei die Abdeckung (2) einen Mechanismus zum Abbilden des vorgegebenen Bereichs von der Normalenrichtung im schwarzen Oberflächenbereich aufweist.

3. Abbildungsunterstützungsvorrichtung (10) nach Anspruch 1 oder 2, mit einer Form, die einem Teil angepasst ist und an der das Teil fixierbar ist, das mindestens ein Teil unter einem Befestigungsteil, einem Gleitbefestigungselement, einem Bolzen, einer Mutter und einem Emblem aufweist.

4. Abbildungsunterstützungsvorrichtung (10) nach einem der Ansprüche 1 bis 3, wobei die Abdeckung (2) eine Form hat, die einem Gegenstand angepasst ist und an der der Gegenstand fixierbar ist, und wobei die Abbildungsunterstützungsvorrichtung (10) ferner einen Mechanismus zum Einschalten der Lichtquelleneinheit (1) aufweist, wenn der angepasste Gegenstand sich in engem Kontakt mit einem Anpassungsabschnitt der Abdeckung (2) befindet.

5. Abbildungsunterstützungsvorrichtung (10) nach einem der Ansprüche 1 bis 4, wobei die Abbildungsunterstützungsvorrichtung (10) eine Form hat, die für jeden abzubildenden Gegenstandstyp dem Gegenstand geeignet anpassbar ist, für jeden Gegenstand ein Bereich eines vorgegebenen schwarzen Oberflächenbereichs eingestellt wird und die Abbildungsunterstützungsvorrichtung (10) in Bezug auf eine Kamera (5) austauschbar ist.

6. Abbildungsunterstützungsvorrichtung (10) nach einem der Ansprüche 1 bis 5, wobei an einem Abschnitt der Abdeckung (2) eine Mikrolinse bereitgestellt wird, an der eine Kamera (5) montierbar ist.

7. Kamera (5), an der die Abbildungsunterstützungsvorrichtung (10) nach einem der Ansprüche 1 bis 6 montiert ist.

8. Abbildungsunterstützungsvorrichtung (10) nach einem der Ansprüche 1 bis 6, wobei das Abbildungsloch zum Montieren der Kamera (5) an einer Mitte des schwarzen Oberflächenbereichs ausgebildet ist.

## Revendications

1. Dispositif d'aide à l'imagerie (10) aidant à l'imagerie d'une région prédéterminée d'une surface en peau de poire d'un objet ayant de minuscules portions concaves et convexes et la région prédéterminée étant soumise à une réflexion spéculaire intense, comprenant :
une unité de source de lumière (1) qui est configurée pour irradier de la lumière ; et un couvercle de protection (2) qui a une forme pour couvrir une région prédéterminée d'une surface de l'objet, dans lequel
une partie d'une surface du couvercle de protection (2) correspondant à une plage angulaire prédéterminée par rapport à une direction de ligne normale directement opposée à la région prédéterminée est une région de surface noire, et une autre surface du couvercle de protection (2) correspondant à une autre plage angulaire est constituée d'une surface de source de lumière diffusant et émettant de la lumière irradiée depuis l'unité de source de lumière (1), et
le couvercle de protection (2) comprend une portion supérieure face à la surface de l'objet ;
une portion de côté prévue entre la surface de l'objet et la portion supérieure et se raccordant à la portion supérieure ; et
un trou d'imagerie prévu dans la portion supérieure du couvercle de protection (2) qui est configuré pour le montage d'une caméra au niveau du trou d'imagerie ; dans lequel
l'unité de source de lumière est prévue à proximité du côté de la portion supérieure de la portion de côté du couvercle de protection (2) et
la région de surface noire est prévue sur une surface interne de la portion supérieure selon une plage angulaire prédéterminée par rapport à la ligne normale de la surface de l'objet,
le dispositif d'aide à l'imagerie (10) étant configuré pour déterminer la plage angulaire de la région de surface noire du couvercle de protection (2) de sorte qu'un degré de séparation d'une valeur de luminosité de pixels dans la région prédéterminée dans une image obtenue par imagerie de la surface en peau de poire de l'objet ou d'un nombre de pixels ayant une luminosité égale ou inférieure à une valeur seuil prédéterminée devienne une valeur prédéterminée ; et
**caractérisé en ce que**
le dispositif d'aide à l'imagerie (10) étant en outre configuré pour déterminer la plage angulaire de la région de surface noire pour chaque article à imager, dans lequel le type de l'article à imager est identifié, sans dépendre d'éléments individuels, par un aspect caractéristique de l'article à imager, l'aspect ayant un même motif dans tous les éléments du même article, et le dispositif d'aide à l'imagerie (10) comprend un mécanisme pour ajuster la plage angulaire de la région de surface noire, à une valeur prédéterminée déterminée au type de l'article.

2. Dispositif d'aide à l'imagerie (10) selon la revendication 1, dans lequel le couvercle de protection (2) est muni d'un mécanisme pour l'imagerie de la région prédéterminée par rapport à la direction de ligne normale, dans la région de surface noire.

3. Dispositif d'aide à l'imagerie (10) selon la revendication 1 ou 2, ayant une forme pour s'adapter sur et fixer une partie comportant au moins l'un d'une partie d'attache, une fermeture à glissière, un boulon, un écrou, et un écusson.

4. Dispositif d'aide à l'imagerie (10) selon l'une quelconque des revendications 1 à 3, dans lequel le couvercle de protection (2) a une forme pour s'adapter à et fixer un objet, et l'aide à l'imagerie (10) comprend en outre un mécanisme pour mettre sous tension l'unité de source de lumière (1) si l'objet adapté est en contact étroit avec une portion d'adaptation du couvercle de protection (2).

5. Dispositif d'aide à l'imagerie (10) selon l'une quelconque des revendications 1 à 4, dans lequel l'aide à l'imagerie (10) a une forme pour s'adapter de manière appropriée à l'article pour chaque type d'objet à imager, une plage d'une région de surface noire prédéterminée est établie pour chaque article, et l'aide à l'imagerie (10) est remplaçable vis-à-vis d'une caméra (5).

6. Dispositif d'aide à l'imagerie (10) selon l'une quelconque des revendications 1 à 5, dans lequel une microlentille est prévue au niveau d'une portion du couvercle de protection (2) pour le montage sur celle-ci d'une caméra (5).

7. Caméra (5) sur laquelle est monté le dispositif d'aide à l'imagerie (10) selon l'une quelconque des revendications 1 à 6.

8. Dispositif d'aide à l'imagerie (10) selon l'une quelconque des revendications 1 à 6, dans lequel le trou d'imagerie pour le montage de la caméra (5) est prévu sur un centre de la région de surface noire.
